# FASCICULE DE BREVET EUROPEEN

(11) **EP 2 214 950 B1**
(45) Date de publication et mention de la délivrance du brevet: **24.08.2011**
(21) Numéro de dépôt: 08805919.1
(22) Date de dépôt: 03.06.2008
(51) Int. Cl.: B62D 43/04

(54) **DISPOSITIF DE FIXATION D'UNE ROUE DE SECOURS D'UN VEHICULE AUTOMOBILE**
VORRICHTUNG ZUR BEFESTIGUNG DES ERSATZRADS EINES KRAFTFAHRZEUGS
DEVICE FOR SECURING THE SPARE WHEEL OF AN AUTOMOBILE

(30) Priorité: 29.11.2007 FR 0759428
(43) Date de publication de la demande: 11.08.2010
(73) Titulaire: Renault S.A.S., 92100 Boulogne-Billancourt (FR)
(72) Inventeur: DELPUECH, Patrick, F-78470 Saint Remy Les Chevreuses (FR); PAUL, Patrice, F-92140 Clamart (FR)
(86) Numéro de dépôt international: PCT/FR2008/050976
(87) Numéro de publication internationale: WO 2009/068765

(56) Documents cités:
- EP-A- 0 064 925
- EP-A- 0 794 108

## Description

La présente invention concerne un dispositif de fixation d'une roue de secours d'un véhicule automobile, comportant une structure d'accueil de la roue et deux moyens d'accroche aptes à coopérer avec au moins un élément de structure du véhicule, ce dispositif de fixation étant formé d'une structure filaire.

Un tel dispositif filaire, appelé communément panier de roue de secours, permet le logement d'une roue de secours sous plancher, avec des moyens légers et peu encombrants. En outre, le montage du panier sous la structure du véhicule est aisé. L'inconvénient d'un tel dispositif, représenté à titre d'exemple dans la demande de brevet FR 2 505 764, qui est en accord avec le préambule de la revendication 1, découle de cette facilité de montage, car lors d'un effort trop important sur l'arrière de la roue de secours lorsqu'elle est en position sur le panier, ou au moment de sa mise en position sur le panier, le dispositif filaire présente le risque de se démonter par rapport à la structure, les moyens d'accroche se désengageant de la structure du véhicule.

Un des objectifs de l'invention est donc de proposer un dispositif de fixation de roue de secours optimisé, pour lequel le maintien en position par rapport à la structure du véhicule est assuré quelque soit l'effort exercé sur la roue de secours et le dispositif de fixation associé.

En réponse à des objectifs que l'on retrouve invariablement chez les différents constructeurs automobiles, la présente invention se veut également peu coûteuse et peu encombrante.

Pour répondre à ces objectifs, l'invention propose un dispositif de fixation tel que décrit ci-dessus, caractérisé en ce que les moyens d'accroche sont réalisés par un premier crochet formé par une première extrémité recourbée d'un fil de la structure, et par un deuxième crochet formé par une deuxième extrémité recourbée d'un fil de la structure, et en ce que le premier crochet présente une forme distincte de la forme du deuxième crochet.

Cette réalisation de crochets dépareillés permet d'éviter que ces crochets sortent de leur logement respectif sous un effort exercé sur le panier et la roue de secours.

Selon différentes caractéristiques de la présente invention :
- le premier crochet présente une forme courbe, dont le rayon de courbure est sensiblement constant ;
- le deuxième crochet présente successivement, dans le prolongement de l'extrémité du deuxième fil de structure, une première portion courbe, une deuxième partie sensiblement rectiligne, et une ultime portion sensiblement perpendiculaire à la deuxième partie rectiligne ;
- le deuxième crochet présente une dimension supérieure à la dimension du premier crochet.

L'invention protège également un véhicule automobile comportant un dispositif de fixation tel qu'évoqué ci-dessus, dans lequel des éléments d'accroche aptes à coopérer avec les moyens d'accroche du dispositif de fixation sont portés par au moins un élément de structure du véhicule, ces éléments d'accroche étant formés par des pièces identiques rapportés sur au moins un élément de structure du véhicule. Ces éléments d'accroche peuvent être rapportés sur un même élément de structure transversal du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un dispositif de fixation de roue de secours selon l'invention, vu de sous le véhicule ;
- la figure 2 est une vue du premier crochet du dispositif représenté à la figure 1 ;
- la figure 3 est une vue du deuxième crochet du dispositif représenté à la figure 1 ;
- la figure 4 est une représentation schématique du dispositif de la figure 1 vue en perspective.

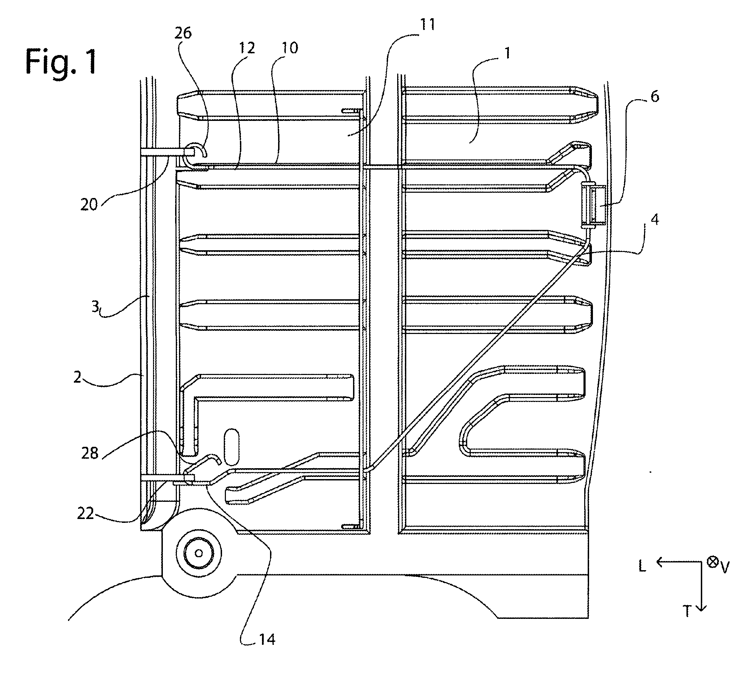

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

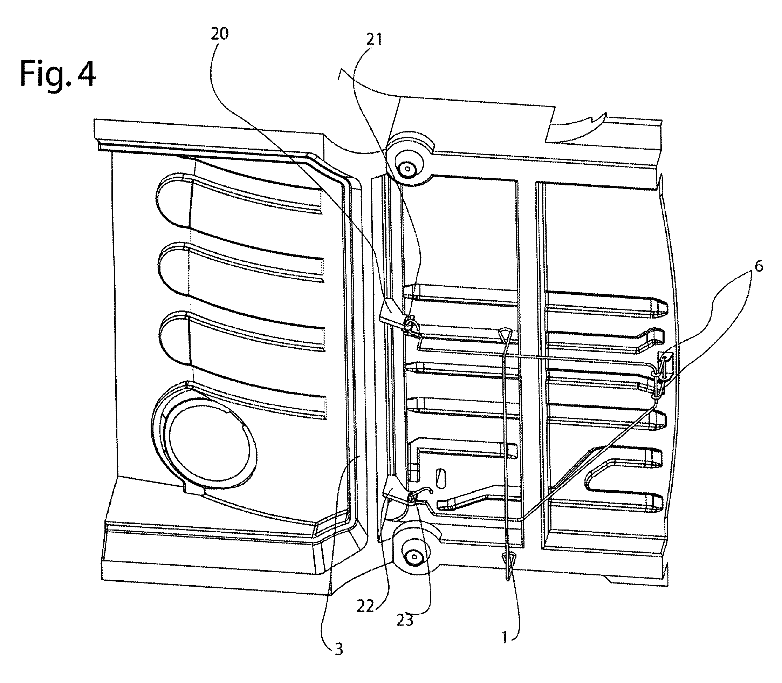

Tel que représenté à titre d'exemple aux figures 1 et 4, un dispositif de fixation de roue de secours 1 selon l'invention est formé d'une structure filaire composée d'un premier fil 10 plié sensiblement en forme de U, de sorte que ses deux extrémités 12, 14 soient orientées longitudinalement vers l'avant du véhicule, et d'un deuxième fil sensiblement transversal 11 et soudé sous le premier fil 10, dont les extrémités sont repliées verticalement vers le haut du véhicule. Cet ensemble forme ainsi une structure d'accueil de la roue de secours, qui vient reposer sur les fils 10, 11 formant cette structure d'accueil par leur croisement.

Les deux extrémités avant 12, 14 du premier fil 10 de la structure forment des moyens d'accroche 16, 18 aptes à coopérer avec des éléments d'accroche 20, 22 solidaires de la structure 2 du véhicule, de sorte que l'ensemble du dispositif de fixation 1 est apte à entrer en rotation autour de l'axe passant par les au moins deux éléments d'accroche 20, 22. Cet axe de rotation permet de passer le dispositif de fixation selon l'invention d'un premier état de manutention, sensiblement vertical dans lequel le dispositif est uniquement relié à la structure 2 du véhicule par cet axe de rotation et dans lequel la roue peut être montée et retirée sur la structure d'accueil du dispositif, à un deuxième état de stockage de la roue, sensiblement horizontal, dans lequel l'extrémité arrière 4 du dispositif de fixation 1 est rendue solidaire de la structure 2 du véhicule par l'intermédiaire de moyens de retenue 6.

Il sera compris que la structure générale du dispositif de fixation, et notamment la répartition des fils formant cette structure, ou l'emplacement des moyens de retenue, a été donnée à titre d'exemple, et qu'elle pourrait évoluer sans sortir du contexte de l'invention, dans laquelle au moins deux extrémités 12, 14 de la structure tubulaire sont adaptées pour coopérer avec la structure 2 du véhicule.

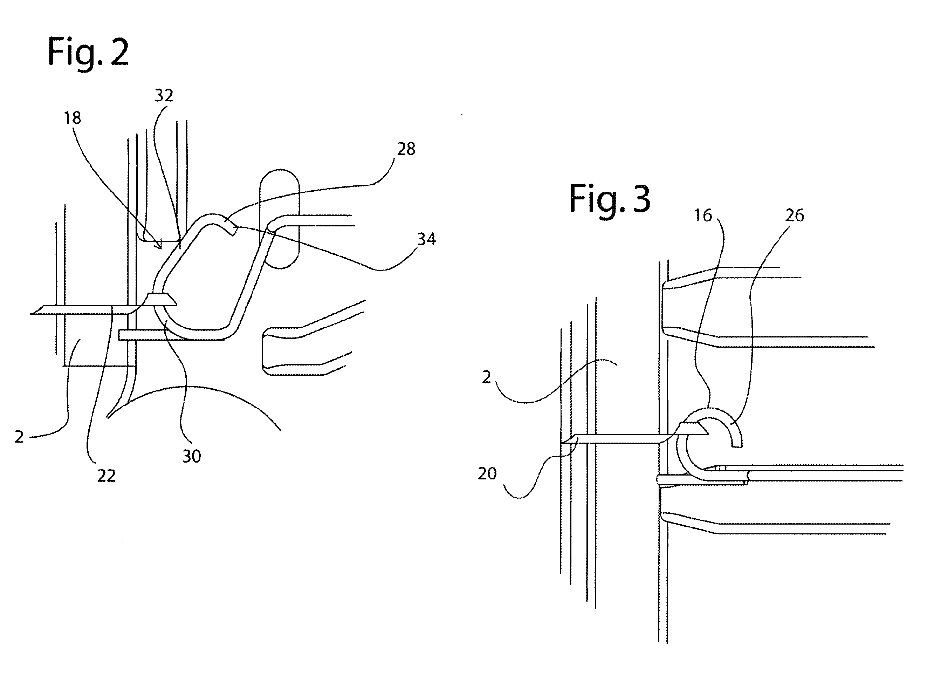

A cet effet, et tel que représenté à la figure 3, un premier moyen d'accroche 16 est formé d'un premier crochet 26. Ce premier crochet 26 présente une forme courbée, de rayon de courbure sensiblement constant. Ce premier crochet 26, sensiblement circulaire, est apte à coopérer avec un premier élément d'accroche 20 solidaire de la structure 2 du véhicule, dans lequel une rainure 21 est réalisée.

D'autre part, un deuxième moyen d'accroche 18 est formé d'un deuxième crochet 28. Ce deuxième crochet 28 présente une forme différente de celle du premier crochet 26, notamment par la présence d'une partie sensiblement rectiligne. Ce deuxième crochet 28, de forme plus complexe, est apte à coopérer avec un deuxième élément d'accroche 22 solidaire de la structure 2 du véhicule, dans lequel une rainure 23 est réalisée. Il est à noter qu'avantageusement, les éléments d'accroche solidaires de la structure du véhicule sont similaires, mais il sera compris que selon l'invention, ces éléments d'accroche pourraient être distincts, et présenter des formes ou des rainures différentes.

Tel que représenté à la figure 2 notamment, le deuxième crochet 28 présente successivement, dans le prolongement de l'extrémité 14 du fil de structure, une première portion courbe 30, une deuxième partie sensiblement rectiligne 32, et une ultime portion 34 sensiblement perpendiculaire à la deuxième partie rectiligne 32. Cette deuxième partie sensiblement rectiligne 32 est orientée de sorte qu'elle présente un angle dans un plan horizontal avec le fil de structure qu'elle prolonge. Une telle inclinaison de la deuxième partie 32, munie d'un renvoi formé par l'ultime portion 34 à son extrémité, permet ainsi d'éviter le délogement du crochet 28 hors de la rainure 23, d'autant plus que la dimension de cette deuxième partie 32 est supérieure à la dimension du premier crochet 26. Cette différence dimensionnelle permet en outre de ne pas pénaliser la facilité du montage.

Cette forme du deuxième crochet 28, combinée à la forme différente du premier crochet 26, permet ainsi un montage sensiblement aussi simple que précédemment, et permet d'absorber des efforts plus importants sans que ces crochets sortent par les rainures correspondantes.

Un véhicule automobile comportant un dispositif de fixation 1 tel que décrit ci-dessus présente des éléments d'accroche 20, 22, aptes à coopérer avec les moyens d'accroche 16, 18 du dispositif de fixation, qui sont portés par au moins un élément de structure 2 du véhicule. Avantageusement, et tel que représenté sur les figures, les éléments d'accroche 20, 22 pourront être solidarisés à un même élément de structure transversal 3.

Ces éléments d'accroche 20, 22 peuvent être formés par des pièces identiques, muni de la même rainure, qui coopère d'une part avec le premier crochet 26, et d'autre part avec le deuxième crochet 28.

L'invention n'est nullement limitée au mode de réalisation décrit et illustré qui n'a été donné qu'à titre d'exemple.

## Revendications

1. Dispositif de fixation d'une roue de secours (1) d'un véhicule automobile, comportant une structure d'accueil de la roue et deux moyens d'accroche (16, 18) aptes à coopérer avec au moins un élément de structure (2) du véhicule, ce dispositif de fixation étant formé d'une structure filaire, sensiblement en forme de U, de sorte que les deux extrémités avant de la structure forment les moyens d'accroche (16, 18), **caractérisé en ce que** les moyens d'accroche (16, 18) sont réalisés par un premier crochet (26) formé par une première extrémité recourbée d'un fil de la structure, et par un deuxième crochet (28) formé par une deuxième extrémité recourbée d'un fil de la structure, et **en ce que** le premier crochet (26) présente une forme distincte de la forme du deuxième crochet (28).

2. Dispositif de fixation selon la revendication 1, **caractérisé en ce que** le premier crochet (26) présente une forme courbe, dont le rayon de courbure est sensiblement constant.

3. Dispositif de fixation selon la revendication 1 ou 2, **caractérisé en ce que** le deuxième crochet (28) présente successivement, dans le prolongement de l'extrémité du fil de structure, une première portion courbe (30), une deuxième partie sensiblement rectiligne (32), et une ultime portion (34) sensiblement perpendiculaire à la deuxième partie rectiligne (32).

4. Dispositif de fixation selon la revendication 3, **caractérisé en ce que** le deuxième crochet (28) présente une dimension supérieure à la dimension du premier crochet (26).

5. Véhicule automobile comportant un dispositif de fixation selon l'une des revendications précédentes, **caractérisé en ce que** des éléments d'accroche (20, 22) aptes à coopérer avec les moyens d'accroche (16, 18) du dispositif de fixation sont portés par au moins un élément de structure (2) du véhicule, et **en ce que** ces éléments d'accroche (20, 22) sont formés par des pièces identiques rapportés sur au moins un élément de structure (2) du véhicule.

6. Véhicule automobile selon la revendication 5, **caractérisé en ce que** les éléments d'accroche (20, 22) sont rapportés sur un même élément de structure transversal (3) du véhicule.

## Claims

1. Device for attaching a spare wheel (1) of a motor vehicle, comprising a structure for receiving the wheel and two coupling means (16, 18) capable of interacting with at least one structural element (2) of the vehicle, this attachment device being formed of a wire structure substantially in the shape of a U, so that the two front ends of the structure form the coupling means, **characterized in that** the coupling means (16, 18) are achieved via a first hook (26) formed by a first curved end of a wire of the structure, and via a second hook (28) formed by a second curved end of a wire of the structure, and **in that** the first hook (26) has a shape different from the shape of the second hook (28).

2. Attachment device according to Claim 1, **characterized in that** the first hook (26) has a curved shape, the radius of curvature of which is substantially constant.

3. Attachment device according to Claim 1 or 2, **characterized in that** the second hook (28) has successively, in line with the end of the structural wire, a first curved portion (30), a second substantially rectilinear portion (32), and a final portion (34) substantially perpendicular to the second rectilinear portion (32).

4. Attachment device according to Claim 3, **characterized in that** the second hook (28) has a dimension greater than the dimension of the first hook (26).

5. Motor vehicle comprising an attachment device according to one of the preceding claims, **characterized in that** coupling elements (20, 22) capable of interacting with the coupling means (16, 18) of the attachment device are supported by at least one structural element (2) of the vehicle, and **in that** these coupling elements (20, 22) are formed by identical parts fitted to at least one structural element (2) of the vehicle.

6. Motor vehicle according to Claim 5, **characterized in that** the coupling elements (20, 22) are fitted to one and the same transverse structural element (3) of the vehicle.

## Patentansprüche

1. Vorrichtung zur Befestigung eines Ersatzrads (1) eines Kraftfahrzeugs mit einer Struktur zur Aufnahme des Rads und zwei Anbringungsmitteln (16, 18), die mit mindestens einem Strukturelement (2) des Fahrzeugs zusammenwirken können, wobei diese Befestigungsvorrichtung durch eine im Wesentlichen U-förmige drahtförmige Struktur gebildet wird, so dass die beiden Vorderenden der Struktur die Anbringungsmittel ( 16, 18 ) bildern, **dadurch gekennzeichnet, dass** die Anbringungsmittel (16, 18) durch einen ersten Haken (26), der durch ein gekrümmtes erstes Ende eines Drahtes der Struktur gebildet wird, und durch einen zweiten Haken (28), der durch ein gekrümmtes zweites Ende eines Drahtes der Struktur gebildet wird, realisiert werden, und dass der erste Haken (26) eine Form aufweist, die sich von der Form des zweiten Hakens (28) unterscheidet.

2. Befestigungsvorrichtung nach Anspruch 1, **dadurch gekennzeichnet, dass** der erste Haken (26) eine Kurvenform aufweist, deren Krümmungsradius im Wesentlichen konstant ist.

3. Befestigungsvorrichtung nach Anspruch 1 oder 2, **dadurch gekennzeichnet, dass** der zweite Haken (28) aufeinander folgend in der Verlängerung des Endes des Strukturdrahts einen ersten Kurventeil (30), einen im Wesentlichen geradlinigen zweiten Teil (32) und einen im Wesentlichen senkrecht zum geradlinigen zweiten Teil (32) verlaufenden äußersten Teil (34) aufweist.

4. Befestigungsvorrichtung nach Anspruch 3, **dadurch gekennzeichnet, dass** der zweite Haken (28) eine größere Abmessung als der erste Haken (26) aufweist.

5. Kraftfahrzeug mit einer Befestigungsvorrichtung nach einem der vorhergehenden Ansprüche, **dadurch gekennzeichnet, dass** Anbringungselemente (20, 22), die mit den Anbringungsmitteln (16, 18) der Befestigungsvorrichtung zusammenwirken können, an mindestens einem Strukturelement (2) des Fahrzeugs vorgesehen sind und dass diese Anbringungselemente (20, 22) durch identische Teile gebildet werden, die an mindestens einem Strukturelement (2) des Fahrzeugs angefügt sind.

6. Kraftfahrzeug nach Anspruch 5, **dadurch gekennzeichnet, dass** die Anbringungselemente (20, 22) an einem gleichen Querstrukturelement (3) des Fahrzeugs angefügt sind.
